# FASCICULE DE BREVET EUROPEEN

(11) **EP 1 116 158 B1**
(45) Date de publication et mention de la délivrance du brevet: **18.12.2002**
(21) Numéro de dépôt: 99941681.1
(22) Date de dépôt: 02.09.1999
(51) Int. Cl.: G06K 7/00

(54) **LECTEUR DE CARTE A PUCE**
CHIPKARTENLESER
SMART CARD READER

(30) Priorité: 04.09.1998 FR 9811443
(43) Date de publication de la demande: 18.07.2001
(73) Titulaire: Inside technologies, 69930 Saint-Clément-les-Places (FR)
(72) Inventeur: KOWALSKI, Jacek, 13090 Aix en Provence (FR); CHARRAT, Bruno, 2 Lot des Marronniers, 13090 Aix en Provence (FR)
(74) Mandataire: Marchand, André
(86) Numéro de dépôt international: FR9902083
(87) Numéro de publication internationale: WO00014672

(56) Documents cités:
- WO-A-97/46964
- FR-A- 2 701 133
- FR-A- 2 752 076
- US-A- 5 799 171

## Description

La présente invention concerne les lecteurs de carte à puce, et plus particulièrement les lecteurs à deux modes de fonctionnement.

Ces dernières années, on a développé et mis au point des circuits intégrés dits "sans contact", agencés pour recevoir ou transmettre des messages par induction électromagnétique au moyen d'une bobine d'antenne. De tels circuits intégrés sont par exemple décrits dans les demandes WO 98/02840, WO 98/02980, WO 98/05123, WO 98/06057, WO 98/06056 au nom de la demanderesse. Ces circuits permettent de réaliser des cartes à puce sans contact qui devraient progressivement remplacer les cartes à contacts conventionnelles.

Etant donné l'important parc de lecteurs de carte à contacts existant dans le commerce, la question s'est rapidement posée de savoir comment le passage de la technologie des cartes à contacts à la technologie des cartes sans contact allait pouvoir se faire de façon simple et rationnelle, sans qu'il soit nécessaire de remplacer l'ensemble des lecteurs existants et l'ensemble des cartes à contacts détenues par les utilisateurs.

On a ainsi proposé des cartes à puce à deux modes de fonctionnement, ou cartes hybrides, comportant à la fois des plages de contact et une bobine d'antenne. Les demandes WO 98/06057 et WO 98/59319 au nom de la demanderesse se rapportent à de telles cartes hybrides.

Toutefois, les cartes hybrides étant d'un coût de revient sensiblement plus élevé que les deux autres types de cartes, il est probable que des cartes à contacts continueront d'être commercialisées. Ainsi, le marché des cartes à puce comprendra dans un proche avenir des lecteurs de carte sans contact, des lecteurs de carte à contacts, des cartes à contacts, des cartes sans contact et des cartes hybrides.

Pour simplifier le parc des lecteurs de cartes à puce, on a donc également songé à développer des lecteurs à deux modes de fonctionnement, capables de dialoguer indifféremment avec des cartes à puce à contact et des cartes à puce sans contact.

La demande WO 97/46964 décrit un tel lecteur, comprenant [fig. 10] une tête de lecture [50] pour carte à puce sans contact et une tête de lecture [28] pour carte à puce à contacts connectées toutes deux au bus de communication [62] de l'unité centrale [64] du lecteur par l'intermédiaire d'un multiplexeur [61]. Selon la position du multiplexeur [61], l'unité centrale [64] est ainsi connectée à la tête de lecture sans contact [50] ou à la tête de lecture à contacts [28].

La présente invention a pour objectif de prévoir une alternative à cette structure classique de lecteur de carte à deux mode de fonctionnement.

Un objectif plus particulier de la présente invention est de prévoir un lecteur de carte à deux modes de fonctionnement qui puisse être réalisé de façon simple à partir d'un lecteur de carte à contacts classique, sans nécessiter une importante transformation matérielle du lecteur.

Cet objectif est atteint par un lecteur de carte à puce comprenant une unité centrale comportant des moyens pour émettre et recevoir sur un bus de communication des messages binaires se présentant sous un premier format déterminé par un protocole de communication pour carte à puce à contacts, un dispositif de réception de carte comportant un connecteur de carte à contacts connecté à l'unité centrale par l'intermédiaire du bus de communication, et une tête de lecture de carte à puce sans contact comportant une interface série, dans lequel l'interface série de la tête de lecture sans contact est connectée directement au moins à un fil de données du bus de communication, et la tête de lecture sans contact est agencée de façon matérielle et/ou logicielle pour ne pas répondre à une commande d'activation de carte à puce à contacts reçue sur l'interface série, et répondre à une commande spécifique d'activation de la tête de lecture sans contact différente d'une commande d'activation de carte à puce à contacts.

Selon un mode de réalisation, la tête de lecture sans contact est en outre alimentée électriquement par un fil d'alimentation du bus de communication.

Selon un mode de réalisation, la tête de lecture sans contact comprend des moyens pour se placer dans un état d'inhibition à sa mise sous tension, et quitter l'état d'inhibition sur réception de la commande spécifique d'activation.

Selon un mode de réalisation, l'unité centrale comprend des moyens pour réaliser les opérations suivantes, sur réception d'un signal de détection de la présence d'une carte dans le lecteur : envoyer sur le bus de communication une commande d'activation de carte à contacts, et attendre une première réponse ; si la première réponse est reçue, établir ou chercher à établir une communication avec une carte à contacts ; si la première réponse n'est pas reçue dans un laps de temps déterminé, envoyer sur le bus de communication la commande spécifique d'activation de la tête de lecture sans contact, et attendre une seconde réponse ; si la seconde réponse est reçue, établir ou chercher à établir une communication avec une carte sans contact.

Selon un mode de réalisation, la commande d'activation de carte à contacts est une commande de remise à zéro selon la norme ISO 7816.

Selon un mode de réalisation, la commande spécifique d'activation de la tête de lecture est une commande susceptible de n'être jamais envoyée à une carte à puce à contacts.

Selon un mode de réalisation, la commande spécifique d'activation de la tête de lecture est un signal envoyé sur au moins un fil du bus de communication qui n'est pas utilisé par les cartes à puce à contacts.

Selon un mode de réalisation, la tête de lecture sans contact comprend des moyens pour convertir des messages reçus sur l'interface série sous le premier format en messages se présentant sous un second format déterminé par un protocole de communication pour carte à puce sans contact et, réciproquement, convertir des messages reçus sous le second format en messages se présentant sous le premier format.

Selon un mode de réalisation, la tête de lecture sans contact est intégrée dans un circuit de faibles dimensions agencé à proximité ou à l'intérieur du dispositif de réception de carte.

La présente invention concerne également un tête de lecture pour carte à puce sans contact, comprenant une interface série pour recevoir ou émettre des messages se présentant sous un premier format déterminé par un protocole de communication pour carte à puce à contacts, et des moyens pour se placer dans un état d'inhibition à sa mise sous tension, et quitter l'état d'inhibition sur réception d'une commande spécifique d'activation reçue sur l'interface série.

Selon un mode de réalisation, l'état d'inhibition se traduit par le fait que la tête de lecture ne répond à aucune commande autre que la commande d'activation de la tête de lecture.

Selon un mode de réalisation, l'état d'inhibition se traduit par le fait que la tête de lecture ne répond à aucune commande autre que la commande d'activation de la tête de lecture ou une commande d'activation de carte à puce.

Selon un mode de réalisation, la tête de lecture comprend des moyens pour retourner dans l'état d'inhibition sur réception d'une commande de désactivation reçue sur l'interface série.

Selon un mode de réalisation, la tête de lecture comprend des moyens pour convertir des messages reçus sur l'interface série sous le premier format en messages se présentant sous un second format déterminé par un protocole de communication pour carte à puce sans contact et, réciproquement, convertir des messages reçus sous le second format en messages se présentant sous le premier format et pour répondre à une commande spécifique d'activation de la tête de lecture sans contact différente d'une commande d'activation de carte à puce à contacts.

Ces objets, caractéristiques et avantages ainsi que d'autres de la présente invention seront exposés plus en détail dans la description suivante d'un mode de réalisation d'un lecteur de carte à puce et d'une tête de lecture sans contact selon l'invention, en relation avec les figures jointes parmi lesquelles :
- la figure 1 représente sous forme de blocs l'architecture électrique d'un lecteur de carte à puce et d'une tête de lecture sans contact selon l'invention,
- les figures 2A à 2C représentent divers exemples de cartes pouvant être lues par le lecteur de la figure 1, et
- la figure 3 est une vue éclatée d'un exemple de réalisation d'un dispositif de réception de carte selon l'invention.

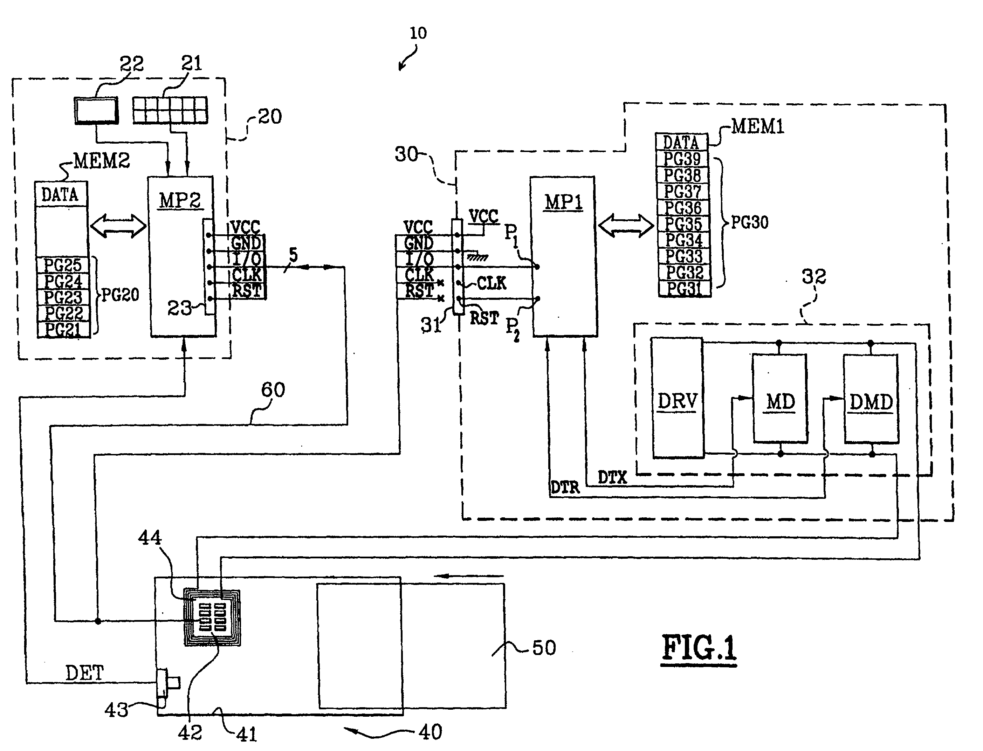

La figure 1 représente un lecteur 10 de carte selon l'invention, comprenant de façon classique :
- une unité centrale 20,
- un bus de communication interne 60, ici du type ISO 7816, comportant un fil d'alimentation VCC, un fil de masse GND, un fil de données I/O, un fil d'horloge CLK, et un fil de remise à zéro RST, et
- un dispositif 40 de réception de carte pourvu d'un connecteur électrique 42 pour carte à puce à contacts.

Le dispositif 40 comprend de façon classique un logement 41 pour recevoir une carte 50 et est équipé d'un mécanisme d'insertion quelconque, manuel ou automatique (non représenté). A l'intérieur du logement 41 se trouve un connecteur 42 classique, à friction ou à atterrissage, ainsi qu'un détecteur de fin de course 43 délivrant un signal DET lorsqu'une carte est insérée. Le connecteur 42 comprend divers éléments de contact avec une carte à puce, par exemple des plots ou des lames métalliques, connectés chacun à l'un des fils du bus de communication 60.

Selon l'invention, le lecteur 10 comprend une tête de lecture 30 pour carte à puce sans contact comprenant une interface série 31 connectée directement au bus de communication 60, sans l'intermédiaire d'un multiplexeur ou tout autre moyen de commutation équivalent. La tête de lecture 30 est par ailleurs connectée à une bobine d'antenne 44, agencée ici à proximité du connecteur 42, dans le dispositif 40 de réception de carte.

Selon l'invention, la tête de lecture sans contact 30 présente diverses caractéristiques d'ordre logiciel et fonctionnel qui vont être maintenant décrites, lui permettant d'être directement connectée au bus 60, pour l'obtention d'une façon simple et peu coûteuse d'un lecteur à deux modes de fonctionnement, sans qu'il soit nécessaire de modifier la structure matérielle de l'unité centrale 20 ni les logiciels qu'elle utilise pour gérer des communications avec des cartes à contacts.

La tête de lecture 30 est d'une structure en soi classique et comprend un microprocesseur MP1, une mémoire MEM1, une interface série 31 et une interface de communication sans contact 32.

L'interface sans contact 32 comprend de façon classique un circuit pilote DRV, un circuit modulateur MD et un circuit démodulateur DMD connectés aux bornes de la bobine 44. Le circuit DRV délivre un signal d'excitation alternatif d'une fréquence normalisée de 125 kHz ou 13,56 MHz. Le circuit MD module le signal d'excitation en fonction de messages DTX à transmettre, fournis par le microprocesseur MP1. Le circuit DMD démodule le signal d'excitation pour en extraire des messages DTR reçus par modulation de charge et couplage inductif. Les messages DTR sont fournis au microprocesseur MP1.

L'interface série 31 comporte des bornes ISO 7816 I/O, VCC, GND, CLK, RST. Elle est connectée aux fils I/O, VCC et GND du bus 60 et n'est pas connectée ici aux fils RST et CLK. La borne I/O est connectée à un port d'entrée/sortie P1 du microprocesseur MP1. La borne RST, bien que n'étant pas connectée au fil RST, peut toutefois être connectée à un port P2 du microprocesseur MP1 en prévision d'un mode de réalisation qui sera décrit plus loin.

Avantageusement la borne VCC, connectée au fil correspondant du bus 60, est utilisée ici comme point d'alimentation électrique de l'ensemble de la tête de lecture 30.

Par ailleurs, la mémoire MEM1 comprend des données DATA et un programme PG30 présentant une structure en couches classique, le programme PG30 comprenant divers sous-programmes PG31 à PG39 décrits par le tableau 1 ci-après.

**Tableau 1**

| (contenu de la mémoire MEM1) | |
|---|---|
| PG39 | Programme de gestion de l'état inhibé/actif |
| PG38 | Programme de gestion de l'interface série 31 |
| PG37 | Programme de conversion du protocole P_{CTL} en protocole ISO 7816 |
| PG36 | Programme de conversion du protocole ISO 7816 en protocole P_{CTL} |
| PG35 | Programme de gestion de la sécurité |
| PG34 | Algorithme de cryptographie |
| PG33 | Algorithme de décodage des messages DTR |
| PG32 | Algorithme de codage des messages DTX |
| PG31 | Système d'exploitation ("operating system") du microprocesseur MP1 |

Les programmes PG32 et PG33, en soi classiques, assurent respectivement le codage des messages DTX envoyés à une carte sans contact et le décodage des messages DTR reçus de la carte. Le programme PG35 gère les procédures d'authentification des cartes sans contact, et s'appuie sur le programme PG34 pour générer des mots binaires d'authentification codés par cryptographie. Le programme PG36 assure la conversion des messages reçus sur l'interface série 31 dans le format ISO 7816-4 en messages se présentant sous un format défini par le protocole de communication sans contact, que l'on désignera P_{CTL}. Ce protocole n'ayant pas encore fait l'objet d'une normalisation, chaque concepteur de circuit intégré est, à ce jour, libre de choisir celui qui lui semble le plus approprié. Ainsi, à titre d'exemple non limitatif, le format P_{CTL} prévu par la demanderesse pour l'envoi de commandes à une carte sans contact comprend les quatre octets suivants :
CODE : code de la commande
ADD : adresse dans la mémoire de la carte
CRC1 : premier octet de signature
CRC2 : deuxième octet de signature
Dans ce cas, les commandes ADPU prévues par la norme ISO 7816-4, reçues sous le format suivant :

| | | | | | | |
|---|---|---|---|---|---|---|
| CLA | INS | P1 | P2 | Lc | DATA | Le |

sont converties en commandes du type précité, et inversement.

Pour fixer les idées, une commande ISO du type READ comprenant les octets suivants (exprimés en hexadécimal) :
CLA = 80ₕ (classe propriétaire)
INS = B2ₕ (commande de lecture)
P1 = xxₕ (numéro du bloc à lire)
P2 = 04ₕ (paramètre par défaut)
L = 3 (nombre d'octets à lire)
est convertie en une commande P_{CTL} du type :
CODE = 30h
Adresse = xx/4
CRC1
CRC2
On voit ici que la conversion de format peut porter non seulement sur le format des commandes mais également sur les codes des commandes et les valeurs des champs d'adresse, selon les nécessités de l'application et la structure de la mémoire de la carte sans contact utilisée.

De façon complémentaire, le programme PG37 convertit les messages reçus par l'interface sans contact 32 sous le format P_{CTL} en réponses ISO 7816-4 du type :

| (Corps) | (suffixe 1) | (suffixe 2) |
|---|---|---|
| Champ de données | SW1 | SW2 |

ces commandes étant envoyées sur le bus 60 par l'intermédiaire de l'interface série 31.

D'autre part, le programme PG38 est un programme de supervision du fonctionnement général de la tête de lecture 30 et de coordination des autres programmes PG32 à PG37, permettant par ailleurs la programmation de certaines options de la tête de lecture 30 et de certains registres d'état du microprocesseur MP1. De façon générale le programme PG38 envoie toujours une réponse sur le bus 60, par exemple un message d'erreur quand une commande n'a pas été exécutée par une carte sans contact.

Selon l'invention, le programme PG39 est prévu pour empêcher que le programme PG38 ait le contrôle de l'interface série 31 à la mise sous tension de la tête de lecture 30, tant qu'une commande d'activation spécifique n'a pas été envoyée à la tête de lecture. Le programme PG39 maintient la tête de lecture 30 dans un état inhibé tant que la commande d'activation n'a pas été reçue, l'état d'inhibition étant défini par le fait que la tête de lecture n'émet aucune réponse à une commande reçue sur l'interface série 31, hormis la commande d'activation précitée.

Le tableau 2 ci-après décrit schématiquement le fonctionnement du programme PG39 et montre comment ce dernier passe la main au programme PG38 quand la commande d'activation est reçue. Les étapes commençant par le chiffre 39 sont des étapes du programme PG39, et celles commençant par le chiffre 38 relèvent du programme PG38. Quand un branchement n'est pas prévu (colonne de droite du tableau), l'étape suivante exécutée est celle qui suit immédiatement l'étape en cours. Par ailleurs, la prévision d'une commande de désactivation peut être considérée comme optionnelle si la tension d'alimentation VCC sur le bus 60 est supprimée au terme d'une communication sans contact.

**Tableau 2**

| (programmes PG39 et PG38) | | |
|---|---|---|
| Etape | Opération | Branchement |
| **39.1** | Démarrage/mise sous tension | |
| **39.2** | Commande reçue ? | non : retour à 39.2 |
| **39.3** | Commande reçue = ACTIV | non : retour à 39.2 |
| **39.4** | Envoyer réponse : OK-ACTIV | aller à 38.1 |
| **39.5** | (retour de PG38) | oui : aller à 39.2 |
| | Commande reçue = DESACTIV | non : retour à 38.1 |
| **39.6** | Envoyer réponse OK-DESACTIV | |
| **38.1** | Commande reçue ? (temporisation) | non : aller à 39.5 |
| **38.2** | Exécuter commande ou transmettre commande sous le format P_{CTL} à l'interface sans contact 32 | |
| **38.3** | Envoyer réponse ISO sur le bus 60 ou répercuter sous le format ISO une réponse reçue d'une carte sans contact | |
| **38.4** | Fin de communication ? | oui : aller à 39.5 |
| | | non : aller à 38.1 |

Selon l'invention, les commandes d'activation ACTIV et de désactivation DESACTIV reçues sous le format ISO sont de préférence des commandes d'un type jamais envoyé ou susceptible de n'être jamais envoyé à une carte à contacts par l'unité centrale 20. En d'autres termes, les. suites de bits formant ces commandes ne doivent pas se retrouver dans l'ensemble des commandes existantes des cartes à contacts. Il s'agit par exemple de commandes interdites par la norme ISO 7816 (CLA interdite, INS interdite, ...) ou de commandes incorporant une suite d'octets particulière ayant une probabilité très faible d'être utilisée au cours d'une communication avec une carte à contacts.

Pour fixer les idées, on trouvera ci-après des exemples de commandes ISO pouvant être retenues comme commandes d'activation et de désactivation.
Commande d'activation :.
   CLA = 8Eₕ (classe propriétaire)
   INS = AAₕ (code de la commande ACTIV)
   P1 = 55ₕ
   P2 = BCₕ
   L = 0 (pas de paramètre demandé en réponse)
Commande de désactivation :
   CLA = 8Eₕ
   INS = ADₕ (code de la commande DESACTIV)
   P1 = 55ₕ
   P2 = BCₕ
   L = 0 (pas de paramètre demandé en réponse)

Dans une variante de réalisation, les commandes d'activation ou de désactivation peuvent également prendre la forme d'une ou de plusieurs impulsions ou signaux envoyés sur un ou plusieurs fils du bus de communication 60, autres que les fils VCC, GND, RST, CLK, I/O, de tels fils étant prévus par la norme ISO 7816 mais généralement inutilisés par les cartes à puce à contacts.

En définitive, la tête de lecture selon l'invention ne répond pas à des commandes ISO circulant sur le bus 60 tant qu'elle est dans l'état inhibé. Les risques de collision avec des réponses envoyées sur le bus 60 par une carte à contacts sont ainsi écartés.

Le fonctionnement du lecteur 10 selon l'invention sera mieux compris à la lecture de la description suivante de l'unité centrale 20.

L'unité centrale 20, d'une structure en soi classique, comprend essentiellement un microprocesseur MP2, une mémoire MEM2 et, accessoirement, un clavier 21 et un écran d'affichage 22. Le microprocesseur MP2 comprend un port série 23 connecté aux fils VCC, GND, I/O, CLK et RST du bus de communication 60.

La mémoire MEM2 comprend des données DATA et un programme PG20 en couches comprenant divers sous-programmes PG21 à PG25 décrits par le tableau 3 ci-après.

**Tableau 3**

| (contenu de la mémoire MEM2) | |
|---|---|
| PG25 | Programme de sélection du mode de fonctionnement |
| PG24 | Programme application du mode sans contact |
| PG23 | Programme application du mode contact |
| PG22 | Gestion du protocole de communication ISO 7816 |
| PG21 | Système d'exploitation ("operating system") du microprocesseur MP2 |

Le programme PG22, ou couche "protocole" du logiciel du lecteur, est un programme classique assurant la mise en forme ISO des commandes ainsi que la gestion des communications. Le programme application PG23, également classique, est prévu pour gérer une transaction avec une carte à contacts. En pratique, l'unité centrale 20 peut utiliser une pluralité de programmes applications PG23 afin de pouvoir communiquer avec une pluralité de carte à contacts d'origines différentes, chaque fabricant de cartes définissant son propre jeu de commandes tout en respectant les recommandations de la norme ISO. Dans ce cas, un programme de reconnaissance de la carte insérée et de sélection du programme application correspondant sera prévu, comme cela est bien connu de l'homme de l'art.

Le programme application PG24, en soi classique, permet de gérer une communication sans contact. Ici également, ce programme dépend du jeu de commandes utilisé par la carte sans contact et de son fabricant. Plusieurs programmes application sans contact sont donc susceptibles de coexister dans la mémoire MEM2.

Selon l'invention, le programme PG25 permet de sélectionner le mode de fonctionnement du lecteur et d'activer si nécessaire la tête de lecture 30. Le fonctionnement du programme PG25 est résumé par le tableau 4 ci-après. Les étapes commençant par les chiffres 23, 24 et 25 relèvent respectivement des programmes PG23, PG24 et PG25. La priorité est donnée au dialogue en mode contact. Si aucune carte à contacts ne répond à la commande d'activation ISO 7816, c'est-à-dire au passage à 1 ou à 0 du signal RST sur le bus 60, l'unité centrale 20 active la tête de lecture 30 et cherche à établir une communication avec une carte sans contact. Si la tentative échoue, un message d'erreur est envoyé à l'utilisateur.

**Tableau 4**

| (programmes PG23, PG24 et PG25) | | |
|---|---|---|
| Etape | Opération | Branchement |
| **25.1** | Démarrage/mise sous tension | |
| **25.2** | Carte insérée ? (signal DET reçu ?) | oui : aller à 23.1 |
| | | non : retour à 25.2 |
| **25.3** | Envoi de la commande ACTIV (activation tête de lecture 30) | aller à 24.1 |
| **25.4** | Envoi d'un message d'erreur : carte absente ou à l'envers | |
| **25.5** | Envoi de la commande DESACTIV (désactivation tête de lecture 30) | aller à 25.2 |
| **23.1** | Recherche d'une communication avec une carte à contacts : remise à zéro sur le fil RST | |
| **23.2** | Réponse ISO 7816 à remise à zéro reçue ? (communication établie ?) | non : aller à 25.3 |
| **23.3** | Dialogue en mode contact | |
| **23.4** | Fin du dialogue | aller à 25.2 |
| **24.1** | Recherche d'une communication avec une carte sans contact | |
| **24.2** | Communication établie ? | non : aller à 25.4 |
| **24.3** | Dialogue en mode sans contact | |
| **24.4** | Fin du dialogue | aller à 25.5 |

Bien entendu, la présente invention est susceptible de diverses variantes et modes de réalisation. Notamment, le fait que la tête de lecture ne réponde pas à une commande de remise à zéro ISO 7816 n'implique pas obligatoirement qu'une telle réponse ne soit pas prévue dans le programme PG39. A titre d'exemple, le tableau 5 ci-après décrit une variante du programme PG39 dans laquelle des étapes 39.31 à 39.34 sont prévues à cet effet. Dans ce cas, il est impératif que la borne RST de l'interface 31 ne soit pas connectée au fil RST du bus 60, de manière que les étapes 39.31 à 39.34 ne soient jamais exécutées. En réalité, ces étapes sont prévues pour permettre à la tête de lecture 30 de répondre à une commande de remise à zéro ISO dans le cadre de la réalisation d'un lecteur exclusivement sans contact. Une telle variante de réalisation du programme PG39 rend la tête de lecture 30 polyvalente et adaptée à tous types d'applications.

**Tableau 5**

| (variante des étapes 39.1 à 39.3) | | |
|---|---|---|
| Etape | Opération | Branchement |
| **39.1** | Démarrage/mise sous tension | |
| **39.2** | Commande reçue ? | non : retour à 39.2 |
| **39.3** | Commande reçue = ACTIV | non : aller à 39.32 |
| **39.4** | Envoyer réponse : OK-ACTIV | aller à 38.1* |
| **39.31** | Commande reçue = Remise à zéro ISO ? | non : retour à 39.2 |
| **39.32** | Envoi d'un message P_{TCL} d'activation d'une carte sans contact | |
| **39.33** | Réponse de la carte sans contact reçue ? | non : retour à 39.2 |
| **39.34** | Envoyer réponse normalisée ISO 7816-2 | aller à 38.1* |

| | | |
|---|---|---|
| (* voir Tableau 2) | | |

Il ressort de ce qui précède que le lecteur 10 selon l'invention est en mesure de lire tout type de carte à puce présente dans le dispositif de réception 40.

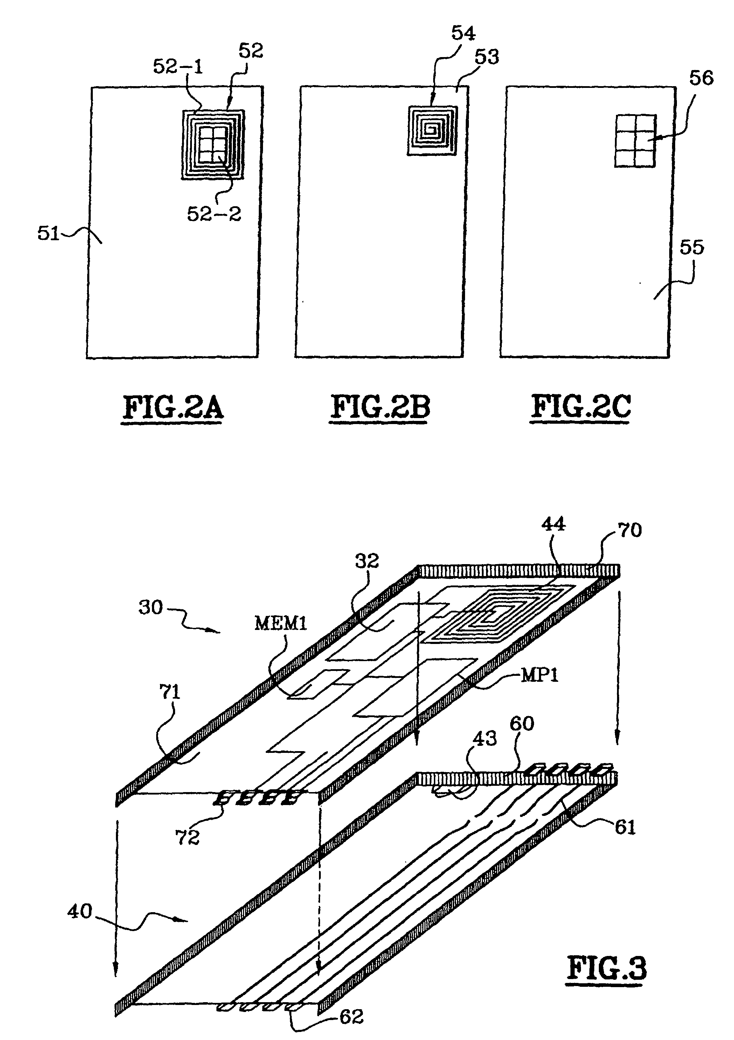

Pour fixer les idées, les figures 2A à 2C représentent trois types de cartes classiques pouvant être lues. La figure 2A représente une carte hybride 51 équipée d'un micromodule 52 comportant à la fois des plages de contact 52-1 et une bobine 52-2. La figure 2B représente une carte 53 exclusivement sans contact, équipée d'un micromodule 54 ne comportant qu'une bobine, et la figure 2C représente une carte 55 exclusivement à contacts, équipée d'un micromodule 56 ne comportant que des plages de contact.

Toutefois, comme on l'a déjà indiqué, les avantages de l'invention ne se limitent pas à la réalisation d'un lecteur à deux modes de fonctionnement mais concernent également la transformation d'un lecteur de carte conventionnel en un lecteur à deux modes de fonctionnement. Ainsi, il ressort de ce qui précède que l'adjonction de la tête de lecture 30 à un lecteur de carte à contacts ne nécessite que l'ajout des programmes PG24 et PG25 dans la mémoire MEM2.

De plus, la tête de lecture sans contact 30 peut être ajoutée de façon simple à un lecteur sans qu'il soit nécessaire de modifier la structure matérielle du lecteur et celle du dispositif de réception de carte 40. Il suffit en pratique de brancher l'interface série 31 de la tête de lecture 30 sur le bus de communication 60, par exemple au moyen d'un connecteur mâle/femelle intercalé entre le connecteur de l'unité centrale 20 et le connecteur du bus 60, ou encore en procédant de la façon décrite ci-après, pour disposer d'un lecteur à deux modes de fonctionnement.

La figure 3 représente un exemple simple d'adaptation d'un lecteur de carte à contacts conventionnel, permettant de réaliser un lecteur à deux modes de fonctionnement selon l'invention. Le dispositif 40 de réception de carte comprend de façon classique un boîtier plastique 60 prévu pour recevoir une carte, représenté par une vue de dessous sans le fond du boîtier. Le boîtier comprend des lames souples 61 qui sont bombées pour former un connecteur à friction. Les lames 61 se prolongent à l'extérieur du boîtier 60 pour former des broches de connexion 62 destinées à être soudées sur une carte à circuit imprimé.

La bobine d'antenne 44 et les autres éléments (MP1, MEM1, 32) de la tête de lecture sans contact 30 prennent la forme de composants plats soudés sur une plaquette à circuit imprimé 71 qui est montée dans un boîtier plastique 70 similaire au boîtier 60. Le boîtier 70 comporte des broches de connexion 72 coïncidant avec des broches 62 du boîtier 60, pour la connexion de la tête de lecture 30 au bus de communication du lecteur. Ainsi, la transformation d'un lecteur de carte conventionnel ne nécessite que le montage du boîtier 70 sur le boîtier 60, et le soudage des broches 72 sur les broches 62.

Dans l'exemple représenté, la bobine 44 est agencée sur la plaquette 71 de manière à se retrouver en regard du micromodule 54 de la carte sans contact 53 représentée en figure 2B, quand celle-ci est insérée dans le boîtier 60. Toutefois, une antenne de plus grande taille rayonnant un champ magnétique dans l'ensemble du boîtier 60 peut être prévue, pour la lecture d'une carte sans contact comprenant une bobine d'antenne de grand diamètre.

Il apparaîtra clairement à l'homme de l'art que la présente invention est susceptible de nombreuses autres variantes et perfectionnements. Notamment, la tête de lecture selon l'invention peut être réalisée sous la forme d'une puce spécifique ("ASIC") de faibles dimensions comportant une bobine d'antenne intégrée, la puce étant dans ce cas agencée à l'intérieur même du dispositif de réception de carte, à proximité du connecteur.

Par ailleurs, bien que la description qui précède se réfère à la norme ISO 7816, il apparaîtra clairement à l'homme de l'art que les idées, principes et caractéristiques de l'invention sont transposables sans difficulté à d'autres types de lecteurs de carte, notamment aux lecteurs de cartes bancaires répondant à la norme AFNOR

## Revendications

1. Lecteur (10) de carte à puce (50, 51, 53, 55) comprenant :
- une unité centrale (20) comportant des moyens (MP2, MEM2, PG20, 23) pour émettre et recevoir sur un bus de communication (60) des messages binaires se présentant sous un premier format déterminé par un protocole (ISO 7816) de communication pour carte à puce à contacts,
- un dispositif (40) de réception de carte comportant un connecteur (42) de carte à contacts connecté à l'unité centrale (20) par l'intermédiaire du bus de communication (60), et
- une tête de lecture (30) de carte à puce sans contact (53) comportant une interface série (31), **caractérisé en ce que** :
- l'interface série (31) de la tête de lecture sans contact (30) est connectée directement au moins à un fil de données (I/O) du bus de communication (60), et
- la tête de lecture sans contact (30) est agencée de façon matérielle et/ou logicielle pour ne pas répondre à une commande d'activation de carte à puce à contacts reçue sur l'interface série (31), et répondre à une commande spécifique (ACTIV) d'activation de la tête de lecture sans contact différente d'une commande d'activation de carte à puce à contacts.

2. Lecteur selon la revendication 1, dans lequel la tête de lecture sans contact (30) est en outre alimentée électriquement par un fil d'alimentation (Vcc) du bus de communication (60).

3. Lecteur selon l'une des revendications 1 et 2, dans lequel la tête de lecture sans contact (30) comprend des moyens (MP1, PG39) pour se placer dans un état d'inhibition à sa mise sous tension, et quitter l'état d'inhibition sur réception de ladite commande spécifique d'activation (ACTIV).

4. Lecteur selon la revendication 3, dans lequel l'unité centrale (20) comprend des moyens (MP2, PG20) pour réaliser les opérations suivantes, sur réception d'un signal de détection (DET) de la présence d'une carte dans le lecteur :
- envoyer sur le bus de communication (60) une commande d'activation de carte à contacts, et attendre une première réponse,
- si la première réponse est reçue, établir ou chercher à établir une communication avec une carte à contacts,
- si la première réponse n'est pas reçue dans un laps de temps déterminé, envoyer sur le bus de communication (60) ladite commande spécifique (ACTIV) d'activation de la tête de lecture sans contact, et attendre une seconde réponse,
- si la seconde réponse est reçue, établir ou chercher à établir une communication avec une carte sans contact.

5. Lecteur selon l'une des revendications 1 à 4, dans lequel ladite commande d'activation de carte à contacts est une commande de remise à zéro selon la norme ISO 7816.

6. Lecteur selon l'une des revendications 1 à 5, dans lequel ladite commande spécifique (ACTIV) d'activation de la tête de lecture est une commande susceptible de n'être jamais envoyée à une carte à puce à contacts.

7. Lecteur selon l'une des revendications 1 à 5, dans lequel ladite commande spécifique (ACTIV) d'activation de la tête de lecture est un signal envoyé sur au moins un fil du bus de communication (60) qui n'est pas utilisé par les cartes à puce à contacts.

8. Lecteur selon l'une des revendications 1 à 7, dans lequel la tête de lecture sans contact (30) comprend des moyens (MP1, PG30) pour convertir des messages reçus sur l'interface série (31) sous le premier format en messages se présentant sous un second format déterminé par un protocole (P_{TCL}) de communication pour carte à puce sans contact et, réciproquement, convertir des messages reçus sous le second format en messages se présentant sous le premier format.

9. Lecteur selon l'une des revendications précédentes, **caractérisé en ce que** la tête de lecture sans contact (30) est intégrée dans un circuit de faibles dimensions agencé à proximité ou à l'intérieur du dispositif (40) de réception de carte.

10. Tête de lecture (30) pour carte à puce sans contact, comprenant une interface série (31) pour recevoir ou émettre des messages se présentant sous un premier format déterminé par un protocole de communication pour carte à puce à contacts (ISO 7816), **caractérisée en ce qu'**elle comprend des moyens (MP1, PG39) pour se placer dans un état d'inhibition à sa mise sous tension, et quitter l'état d'inhibition sur réception d'une commande spécifique d'activation (ACTIV) reçue sur l'interface série (31).

11. Tête de lecture selon la revendication 10, dans laquelle l'état d'inhibition se traduit par le fait que la tête de lecture ne répond à aucune commande autre que ladite commande d'activation (ACTIV) de la tête de lecture.

12. Tête de lecture selon la revendication 10, dans laquelle l'état d'inhibition se traduit par le fait que la tête de lecture ne répond à aucune commande autre que ladite commande d'activation (ACTIV) de la tête de lecture ou une commande d'activation (RST) de carte à puce.

13. Tête de lecture selon l'une des revendications 10 à 12, **caractérisée en ce qu'**elle comprend des moyens pour retourner dans l'état d'inhibition sur réception d'une commande de désactivation (DESACTIV) reçue sur l'interface série.

14. Tête de lecture selon l'une des revendications 10 à 13, **caractérisée en ce qu'**elle comprend des moyens (MP1, PG36, PG37) pour convertir des messages reçus sur l'interface série sous le premier format en messages se présentant sous un second format déterminé par un protocole de communication pour carte à puce sans contact (P_{CTL}) et, réciproquement, convertir des messages reçus sous le second format en messages se présentant sous le premier format et pour répondre à une commande spécifique (ACTIV) d'activation de la tête de lecture sans contact différente d'une commande d'activation de carte à puce à contacts.

## Claims

1. A smart card (50, 51, 53, 55) reader (10) comprising:
- a central unit (20) comprising means (MP2, MEM2, PG20, 23) for emitting and receiving on a communication bus (60) binary messages which are in a first format determined by a communication protocol (ISO 7816) for a contact-type smart card,
- a card receiving device (40) comprising a contact-type card connector (42) connected to the central unit (20) by way of the communication bus (60), and
- a contactless smart card (53) reading head (30) comprising a serial interface (31), **characterised in that**:
- the serial interface (31) of the contactless reading head (30) is connected directly at least to a data wire (I/O) of the communication bus (60), and
- the contactless reading head (30) is arranged in respect of hardware and/or software to not respond to a contact-type smart card activation command received at the serial interface (31) and respond to a specific activation command (ACTIV) of the contactless reading head which is different from a contact-type smart card activation command.

2. A reader according to claim 1 wherein the contactless reading head (30) is also electrically supplied by a supply wire (Vcc) of the communication bus (60).

3. A reader according to one of claims 1 and 2 wherein the contactless reading head (30) comprises means (MP1, PG39) for putting itself in an inhibition state when voltage is applied thereto and leaving the inhibition state upon reception of said specific activation command (ACTIV).

4. A reader according to claim 3 wherein the central unit (20) comprises means (MP2, PG20) for executing the following operations upon the reception of a detection signal (DET) in respect of the presence of a card in the reader:
- sending on the communication bus (60) a contact-type card activation command and awaiting a first response,
- if the first response is received establishing or trying to establish a communication with a contact-type card,
- if the first response is not received in a given time lapse sending on the communication bus (60) said specific command (ACTIV) for activation of the contactless reading head and awaiting a second response, and
- if the second response is received establishing or trying to establish a communication with a contactless card.

5. A reader according to one of claims 1 to 4 wherein said contact-type card activation command is a zero resetting command in accordance with the standard ISO 7816.

6. A reader according to one of claims 1 to 5 wherein said specific activation command (ACTIV) of the reading head is a command which is capable of never being sent to a contact-type smart card.

7. A reader according to one of claims 1 to 5 wherein said specific activation command (ACTIV) of the reading head is a signal which is sent on at least one wire of the communication bus (60), which is not used by the contact-type smart cards.

8. A reader according to one of claims 1 to 7 wherein the contactless reading head (30) comprises means (MP1, PG30) for converting messages received on the serial interface (31) in the first format into messages which are in a second format determined by a communication protocol (P_{TCL}) for a contactless smart card and conversely for converting messages received in the second format into messages which are in the first format.

9. A reader according to one of the preceding claims **characterised in that** the contactless reading head (30) is integrated into a circuit of small dimensions which is arranged in the proximity of or in the interior of the card receiving device (40).

10. A reading head (30) for a contactless smart card comprising a serial interface (31) for receiving or emitting messages which are in a first format determined by a communication protocol (ISO 7816) for contact-type smart cards, **characterised in that** it comprises means (MP1, PG39) for putting itself in an inhibition state when voltage is applied thereto and leaving the inhibition state upon reception of a specific activation command (ACTIV) received at the serial interface (31).

11. A reading head according to claim 10 wherein the inhibition state is manifested by the fact that the reading head does not respond to any command other than said reading head activation command (ACTIV).

12. A reading head according to claim 10 wherein the inhibition state is manifested by the fact that the reading head does not respond to any command other than said reading head activation command (ACTIV) or a smart card activation command (RST).

13. A reading head according to one of claims 10 to 12 **characterised in that** it comprises means for returning to the inhibition state upon the reception of a deactivation command (DESACTIV) received at the serial interface.

14. A reading head according to one of claims 10 to 13 **characterised in that** it comprises means (MP1, PG36, PG37) for converting messages received at the serial interface in the first format into messages which are in a second format determined by a communication protocol (P_{TCL}) for a contactless smart card and conversely for converting messages received in the second format into messages which are in the first format and responding to a specific activation command (ACTIV) of the contactless reading head which is different from a contact-type smart card activation command.

## Patentansprüche

1. Leser (10) einer Chip-Karte (50, 51, 53, 55), umfassend:
- eine Zentral-Einheit (20), enthaltend Mittel (MP2, MEM2, PG20, 23), um auf einem Bus (60) zur Übermittlung binärer Nachrichten zu senden und zu empfangen, welche unter einem ersten Format vorliegen, das durch ein Kommunikationsprotokoll (ISO 7816) für Karte-zu-Karte-Kontakte bestimmt ist,
- eine Vorrichtung (40) zur Karten-Aufnahme, enthaltend ein Kontakt-Karten-Anschlussstück (42), das an die Zentral-Einheit (20) über das Zwischenteilstück des Kommunikationsbusses (60) angeschlossen ist, und
- einen Lese-Kopf (30) einer kontaktlosen Chip-Karte (53), enthaltend eine Grenzflächenserie (31),
**dadurch gekennzeichnet, dass**
- die Grenzflächenserie (31) des kontaktlosen Lese-Kopfes (30) direkt mindestens an einen Draht von Daten (I/O) des Kommunikationsbusses (60) angeschlossen ist, und dass
- der kontaktlose Lese-Kopf (30) in materieller und/oder logischer Weise angeordnet ist, um auf einen Aktivierungsbefehl einer Kontakt-Chip-Karte, der auf der Grenzflächenserie (31) empfangen wird, nicht zu antworten und auf einen spezifischen Aktivierungsbefehl (ACTIV) des kontaktlosen Lese-Kopfes zu antworten, welcher sich von einem Aktivierungsbefehl einer kontakt-Chip-Karte unterscheidet.

2. Leser gemäß Anspruch 1, worin der kontaktlose Lese-Kopf (30) außerdem durch einen Versorgungsdraht (Vcc) des Kommunikationsbusses (60) elektrisch versorgt wird.

3. Leser gemäß einem der Ansprüche 1 oder 2, worin der kontaktlose Lese-Kopf (30) Mittel (MP1, PG39) umfasst, um sich in einen Inhibierungszustand beim Anlegen einer Spannung zu begeben und den Inhibierungszustand auf Empfang des genannten spezifischen Aktivierungsbefehls (ACTIV) wieder zu verlassen.

4. Leser gemäß Anspruch 3, worin die Zentral-Einheit (20) Mittel (MP2, PG20) umfasst, um auf Empfang eines Nachweissignals (DET) des Vorliegens einer Karte im Leser die folgenden Betriebsabläufe durchzuführen, und zwar um:
- auf dem Kommunikationsbus (60) einen Kontakt-Karte-Aktivierungsbefehl zu senden und eine erste Antwort zu erwarten, um,
- wenn die erste Antwort empfangen ist, eine Kommunikation mit einer Kontakt-Karte zu erstellen oder danach zu suchen, um,
- wenn die erste Antwort in einem bestimmten Zeitablauf nicht empfangen wird, auf dem Kommunikationsbus (60) den genannten spezifischen Aktivierungsbefehl (ACTIV) des kontaktlosen Lese-Kopfes zu senden und eine zweite Antwort zu erwarten und um,
- wenn die zweite Antwort empfangen wird, eine Kommunikation mit einer kontaktlosen Karte zu erstellen oder danach zu suchen.

5. Leser gemäß einem der Ansprüche 1 bis 4, worin der genannte Kontakt-Karte-Aktivierungsbefehl ein Befehl zur Aufnahme bei Null gemäß der Norm ISO 7816 ist.

6. Leser gemäß einem der Ansprüche 1 bis 5, worin der genannte spezifische Aktivierungsbefehl (ACTIV) des Lese-Kopfes ein Befehl ist, der niemals an eine Kontakt-Chip-Karte gesendet wird.

7. Leser gemäß einem der Ansprüche 1 bis 5, worin der; genannte spezifische Aktivierungsbefehl (ACTIV) des Lese-Kopfes ein Signal ist, das auf mindestens einem Draht des Kommunikationsbusses (60) gesendet wird, welcher nicht von den Kontakt-Chip-Karten genutzt wird.

8. Leser gemäß einem der Ansprüche 1 bis 7, worin der kontaktlose Lese-Kopf (30) Mittel (MP1, PG30) umfasst, um auf der Grenzflächenserie (31) unter dem ersten Format empfangene Nachrichten in Nachrichten umzuwandeln, die unter einem zweiten Format vorliegen, das durch ein Kommunikationsprotokoll (P_{TCL}) für kontaktlose Chip-Karten bestimmt ist, und, in reziproker Weise, unter dem zweiten Format empfangene Nachrichten in Nachrichten umzuwandeln, die unter dem ersten Format vorliegen.

9. Leser gemäß einem der vorhergehenden Ansprüche, **dadurch gekennzeichnet, dass** der kontaktlose Lese-Kopf (30) in einen Schaltkreis mit geringen Abmessungen integriert ist, der in der Nähe oder im Inneren der Vorrichtung (40) zur Karten-Aufnahme angeordnet ist.

10. Lese-Kopf (30) für eine kontaktlose Chip-Karte, umfassend eine Grenzflächenserie (31) zum Empfangen oder Aussenden von Nachrichten, welche in einem ersten Format vorliegen, das durch ein Kommunikationsprotokoll für eine Kontakt-Chip-Karte bestimmt ist (ISO 7816), **dadurch gekennzeichnet, dass** er Mittel (MP1, PG 39) umfasst, um sich in einen Inhibierungszustand bei Anlegen einer Spannung zu begeben und den Inhibierungszustand auf Empfang eines spezifischen Aktivierungsbefehls (ACTIV) wieder zu verlassen, der auf der Grenzflächenserie (31) empfangen wird.

11. Lese-Kopf gemäß Anspruch 10, worin sich der Inhibierungszustand daraus ergibt, dass der Lese-Kopf auf keinen anderen Befehl als den genannten Aktivierungsbefehl (ACTIV) des Lese-Kopfes antwortet.

12. Lese-Kopf gemäß Anspruch 10, worin sich der Inhibierungszustand daraus ergibt, dass der Lese-Kopf auf keinen anderen als den genannten Aktivierungsbefehl (ACTIV) des Lese-Kopfs oder auf einen Chip-Karten-Aktivierungsbefehl (RST) antwortet.

13. Lese-Kopf gemäß einem der Ansprüche 10 bis 12, **dadurch gekennzeichnet, dass** er Mittel umfasst, um in den Inhibierungszustand auf Empfang eines Desaktivierungsbefehls (DESACTIV) zurückzukehren, der auf der Grenzflächenserie empfangen wird.

14. Lese-Kopf gemäß einem der Ansprüche 10 bis 13, **dadurch gekennzeichnet, dass** er Mittel (MP1, PG36, PG37) umfasst, um Nachrichten, die auf der Grenzflächenserie im ersten Format empfangen werden, in Nachrichten umzuwandeln, die in einem zweiten Format vorliegen, das durch ein Kommunikationsprotokoll (P_{CTL}) für eine kontaktlose Chip-Karte bestimmt ist, und, in reziproker Weise, Nachrichten, die im zweiten Format empfangen werden, in Nachrichten umzuwandeln, die im ersten Format vorliegen, und um auf einen spezifischen Aktivierungsbefehl (ACTIV) des kontaktlosen Lese-Kopfes zu antworten, der sich von einem Kontakt-Chip-Karten-Aktivierungsbefehl unterscheidet.
